# EUROPÄISCHE PATENTSCHRIFT

(11) **EP 2 684 023 B1**
(45) Veröffentlichungstag und Bekanntmachung des Hinweises auf die Patenterteilung: **25.12.2019**
(21) Anmeldenummer: 12708676.7
(22) Anmeldetag: 06.03.2012
(51) Int. Cl.: G01N 5/02, G01N 15/02, G01N 15/06

(54) **IMPAKTOR UND VERFAHREN ZUR CHARAKTERISIERUNG EINES MIT SCHWEBETEILCHEN ANGEREICHERTEN TRÄGERGASES**
IMPACTOR AND METHOD FOR CHARACTERIZING A CARRIER GAS ENRICHED WITH SUSPENDED PARTICLES
IMPACTEUR ET PROCÉDÉ DE CARACTÉRISATION D'UN GAZ PORTEUR ENRICHI DE PARTICULES EN SUSPENSION

(30) Priorität: 11.03.2011 DE 102011013697
(43) Veröffentlichungstag der Anmeldung: 15.01.2014
(73) Patentinhaber: Testo SE & Co. KGaA, 79853 Lenzkirch (DE)
(72) Erfinder: STICH, Ralf, 79256 Buchenbach (DE); LAUFER, Michael, 79106 Freiburg (DE); BÄR, Jürgen, 79877 Friedenweiler (DE)
(74) Vertreter: Börjes-Pestalozza, Henrich
(86) Internationale Anmeldenummer: PCT/EP2012/000997
(87) Internationale Veröffentlichungsnummer: WO 2012/123078

(56) Entgegenhaltungen:
- DE-A1- 10 061 976
- DE-A1-102005 056 718
- DE-A1-102007 013 938
- US-A1- 2005 028 616
- US-A1- 2005 172 735
- US-A1- 2005 247 868
- US-B1- 6 431 014
- HO M. H.: "APPLICATIONS OF QUARTZ CRYSTAL MICRO-BALANCES IN AEROSOL MASS MEASUREMENT" In: LU C., Czanderna A.W.: "APPLICATIONS OF PIEZOELECTRIC QUARTZ CRYSTAL MICROBALANCES", 31. Dezember 1984 (1984-12-31), Elsevier, Amsterdam - Oxford - New York - Tokyo, XP008151493, Bd. 7, Seiten 351-388, Seite 358 - Seite 359; Abbildung 1a

## Beschreibung

Die Erfindung betrifft einen Impaktor zur Analyse eines mit Schwebeteilchen angereicherten Trägergases gemäß Anspruch 1.

Die Erfindung betrifft weiter ein Verfahren zur Charakterisierung eines mit Schwebeteilchen angereicherten Trägergases gemäß Anspruch 12.

Eine derartige Vorrichtung und ein derartiges Verfahren sind beispielsweise aus der EP 1 957 955 B1 bekannt, bei welcher der Schwingquarz in drei um seine normale Symmetrieachse rotationssymmetrisch zueinander angeordnet Punkten gehalten wird. Die Verwendung eines Schwingquarzes bietet gegenüber den Folien zur Aufnahme der abgelagerten Schwebeteilchen den Vorteil, dass eine Messung der abgelagerten Masse ohne Ausbau der Prallplatte möglich ist.

Aus US 2005/01722735 A1 ist eine Vorrichtung zur Analyse von Aerosolen bekannt, bei der ein Magazin 8 oder 12 Halterungen mit Schwingquarzen aufweist, wobei durch die Vielzahl von Kristallkollektoren es erlaubt, die Frequenz der nicht den Aerosolen ausgesetzten Kristalle nach der Ablagerung zu bestimmen, um einen Massenverlust zu erhalten.

Aus HO M. H.: "Applications of quartz crystal micro-balances in aerosol measurement", in: LU C. Czanderna A. W.: "Applications of piezoelectric quartz crystal micro-balances", 31. Dezember 1984, ELSEVIER, Amsterdam etc., Band 7, Seiten 351 bis 388 ist eine Schwingquarz-Mikrowaage zur Aerosol-Massenmessung bekannt, bei der ein Motor zur horizontalen Bewegung eines Kristalls ausgebildet ist.

Aus DE 10061976 A1 sind eine Anordnung und ein Verfahren zur quantitativen und qualitativen Analyse von Partikeln in Gasen bekannt, bei welchen zumindest eine aktive Leit- oder Lenkvorrichtung für das Gas beziehungsweise die darin enthaltenen Partikel vorgesehen ist.

Aus US 6431014 B1 sind ein hochgenauer Aerosol-Impaktor und Monitor bekannt, welcher Düsenanordnungen aufweist, bei denen die Düsen auf unterschiedlichen Radien in Bezug auf eine Drehbewegung der rotierbaren Prallplatten ausgebildet sind.

Aus US 2005/0028616 A1 ist ein Kaskadenimpaktor mit einzeln angetriebenen Prallplatten bekannt, bei welchem die Impaktordüsen auf unterschiedlichen Radien in Bezug auf die Drehbewegung der Prallplatten angeordnet sind.

Aus US 2005 024 786 8 A1 ist ein biologischer Alarm bekannt, bei welchem eine Sammeloberfläche analysiert und nach Analyse regeneriert wird, um die Sammeloberfläche in einer Vielzahl von Zyklen zu verwenden.

Aus DE 10 2007 013 938 A1 ist eine Vorrichtung zur Messung von Feinstpartikelmassen bekannt, bei der mindestens eine Depositionsfläche auf einem feststehenden Schwingquarz angeordnet ist.

Aus DE 10 2005 056 718 A1 ist ein Impaktor zur Feinstaubmessung bekannt, bei welchem eine Prallplatte einen Schwingquarz aufweist, der in einzelnen Punkten an seinem Rand mit drei federnd abgestützten Halteelementen gegen drei ortsfeste Widerlager ortsfest gehalten wird.

Aus US 2003/0123059 A1 sind ein Verfahren und eine Vorrichtung zur Bestimmung von nicht-flüchtigen Bestandteilen von Aerosol-Partikeln in einer Gasprobe bekannt, bei welchen ein Schwingquarz raumfest angeordnet ist.

Aus Klaus, N. und Berner, A.: "Ein Kaskadenimpaktor mit rotierenden Stauplatten", STAUBREINHALTUNG DER LUFT, Springer Verlag, Berlin, DE, Band 45, 01.01.1085, Seiten 168 bis 170, ist ein Kaskadenimpaktor mit rotierenden Stauplatten bekannt, wobei die Stauplatten Niederschlagsfolien aufweisen, die fotografisch auswertbar sind und bei welchen Düsenplatten spiralförmige Anordnungen von Bohrungen zur Ausbildung der Düsen aufweisen.

Aus US 3715911 A ist eine Vorrichtung zur Nutzung von schwebender polarer Materie bekannt, bei welcher ein Endschalter zur Begrenzung einer Schwenkbewegung entlang einer Achse quer zur Strömungsrichtung des Impaktors ausgebildet ist und bei welcher ein Schwingquarz fest montiert verwendet wird.

Der Erfindung liegt die Aufgabe zugrunde, die Messgenauigkeit eines Impaktors zu verbessern.

Zur Lösung dieser Aufgabe sind bei einem Impaktor die Merkmale von Anspruch 1 vorgesehen. Insbesondere ist somit bei einem Impaktor der eingangs genannten Art vorgesehen, dass die Prallplattenhalterung mit einem Motor relativ zu der Klassierdüse bewegbar angeordnet ist. Der Impaktor kann somit einen Motor aufweisen, mit welchem eine Bewegung der Prallplattenhalterung mit dem resonant schwingenden, massensensitiven Element antreibbar ist. Von Vorteil ist dabei, dass der Ablagerungsort der Schwebeteilchen auf dem resonant schwingenden, massensensitiven Element während des Ablagerungsvorgangs und/oder zwischen zwei aufeinander folgenden Ablagerungsvorgängen veränderbar ist, sodass die von dem resonant schwingenden, massensensitiven Element dargebotene Fläche besser ausnutzbar ist. Eine Auswechslung beziehungsweise Reinigung des voll beladenen Schwingquarzes ist daher erst in größeren Abständen erforderlich, was die Gebrauchseigenschaften des Impaktors deutlich verbessert. Mit der Erfindung ist es daher nicht mehr erforderlich, zur gleichmäßigen Beladung der Prallplatte mehrere Klassierdüsen in Parallelanordnung vorzusehen, durch welche das Trägergas auf die Prallplatte geleitet wird.

Unter einem resonant schwingenden, massensensitiven Element wird für die Erfindung ein elektrisch oder elektronisch auslesbares Element verstanden, welches eine massenabhängige Resonanzfrequenz aufweist. Die Resonanzfrequenz ist elektrisch oder elektronisch auslesbar. Beispielsweise kann das resonant schwingende, massensensitive Element als Schwingquarz oder als SAW-Element, also als auf akustische Oberflächenwellen ansprechendes Element, oder als Element nach einem anderen Messprinzip ausgebildet sein. Ist an der Prallplattenhalterung ein Schwingquarz gehalten, so kann die Prallplattenhalterung auch als Schwingquarzhalterung bezeichnet werden.

Besonders einfache Bewegungsabläufe lassen sich erreichen, wenn die Prallplattenhalterung um eine Achse dreh- oder schwenkbar angeordnet ist. Somit kann beispielsweise erreicht werden, dass der Auftreffpunkt auf die Prallplatte des mit Schwebeteilchen angereicherten Trägergases auf der Prallplatte entlang eines Kreisbogens oder eines Kreises, wobei der Mittelpunkt mit der Achse der Dreh- oder Schwenkbewegung zusammenfällt, wandert.

Zur Reinigung und/oder zum Austausch der Klassierdüse kann vorgesehen sein, dass die Klassierdüse herausnehmbar im Impaktor angeordnet ist.

Zur Erreichung günstiger Durchströmungseigenschaften kann vorgesehen sein, dass die Klassierdüse beheizbar ausgebildet ist. Vorzugsweise kann eine ringförmige Heizung vorgesehen sein, welche die Klassierdüse und/oder die Klassierdüseneinheit außenseitig ringförmig umgibt.

Um einen definierten Abstand zwischen Prallplatte und Klassierdüse auf einfache Weise einzuhalten, kann vorgesehen sein, dass die Prallplattenhalterung an der Klassierdüseneinheit anliegt oder abgestützt ist. Dies ist besonders günstig in Kombination mit einer herausnehmbaren Klassierdüse und/oder mit einer herausnehmbaren Prallplattenhalterung.

Um einen vorgegebenen Bewegungsablauf möglichst genau einhalten zu können, kann vorgesehen sein, dass die Prallplattenhalterung an der Klassierdüseneinheit bezüglich der Achse einer Dreh- oder Schwenkbewegung radial geführt ist. Von Vorteil ist dabei, dass auch während der Bewegung der Prallplattenhalterung relativ zur Klassierdüse definierte geometrische Verhältnisse auf einfache Weise eingehalten werden können.

Es hat sich herausgestellt, dass bei resonant schwingenden, massensensitiven Elementen unterschiedliche Massenempfindlichkeiten erreichbar sind, also dass unterschiedliche resonant schwingende, massensensitive Elemente jeweils eine individuelle Abhängigkeit der Änderung der Resonanzfrequenz bei einem vorgegebenen Massenzuwachs zeigen. Diese Massensensitivität hängt von der Position des Auftreffpunkts des Trägergases auf der Oberfläche des resonant schwingenden, massensensitiven Elements, insbesondere vom Abstand des Auftreffpunktes vom Rand oder Aufspannpunkt des Elements, ab. Besonders günstig ist es daher, wenn der Auftreffpunkt durch die erfindungsgemäße Relativbewegung entlang einer Linie konstanter Massensensitivität geführt wird.

Bei einem scheibenförmig runden Element sind diese Linien beispielsweise Kreise oder Kreisbögen.

In diesem Fall und vielen weiteren Fälle ist eine Dreh- oder Schwenkbewegung besonders vorteilhaft, deren Dreh- oder Schwenkachse mit dem Mittelpunkt der Kreise und/oder einem Flächenmittelpunkt des resonant schwingenden, massensensitiven Elements zusammenfällt.

Bei einer Ausgestaltung der Erfindung kann vorgesehen sein, dass die Prallplattenhalterung an einem Motorgehäuse des Motors zumindest radial geführt ist. Von Vorteil ist dabei, dass mit einfachen Mitteln eine definierte Dreh- oder Schwenkbewegung der Prallplattenhalterung erreichbar ist. Besonders günstig ist es, wenn die Prallplattenhalterung an ihrer dem Motorgehäuse zugewandten Seite durch das Motorgehäuse und an ihrer der Klassierdüseneinheit zugewandten Seite durch die Klassierdüseneinheit radial geführt ist, sodass sich eine beidseitige Führung der Prallplattenhalterung während der Dreh- oder Schwenkbewegung ergibt.

Besonders günstig ist es, wenn die Klassierdüseneinheit an ihrer dem resonant schwingenden, massensensitiven Element zugewandten Seite ein Führungsmittel zur radialen und/oder axialen Führung der Prallplattenhalterung aufweist. Ein solches Führungsmittel kann beispielsweise als Führungsnut und/oder als Führungskragen oder als Führungsvorsprung ausgebildet sein.

Bei einer Ausgestaltung der Erfindung kann vorgesehen sein, dass an einem dreh- oder schwenkbaren Teil und/oder an einem stationären Teil, beispielsweise an der Klassierdüseneinheit und/oder an der Prallplattenhalterung, ein Anschlag ausgebildet ist, welcher die Dreh- oder Schwenkbewegung der Prallplattenhalterung um die Achse gegenüber einem Vollkreis begrenzt. Beispielsweise kann der Anschlag als Vorsprung ausgebildet sein, welcher in eine Führungsnut eingreift, welche entlang des begrenzten Dreh- oder Schwenkbereichs ausgebildet ist. Von Vorteil ist dabei, dass auf einfache Weise ein Überdrehen der Prallplattenhalterung gegenüber den stationären Teilen des Impaktors erreicht ist. Somit können elektrische Signale vom und/oder zum resonant schwingenden, massensensitiven Element über ein Anschlusskabel geleitet werden, und die Verwendung von Schleifkontakten kann vermieden werden.

Bei einer Ausgestaltung der Erfindung kann vorgesehen sein, dass die Prallplattenhalterung eine Halteplatte aufweist, an welcher der Schwingquarz gehalten ist. Von Vorteil ist dabei, dass zum einen der Schwingquarz auf einfache Weise in einer definierten Position fixierbar ist und dass zum anderen der Schwingquarz auf einfache Weise auswechselbar ist.

Es kann vorgesehen sein, dass die Prallplattenhalterung federnde Kontaktstifte aufweist, welche in Gebrauchsstellung die Halteplatte, vorzugsweise an der Unterseite der Halteplatte, kontaktieren. Von Vorteil ist dabei, dass der elektrische Anschluss eines auswechselbaren Schwingquarzes auf einfache Weise herstellbar ist.

Zur Übermittlung der elektrischen Signale vom oder zum resonant schwingenden, massensensitiven Element kann vorgesehen sein, dass die Kontaktstifte mit einem flexiblen Anschlusskabel elektrisch verbunden sind.

Die Länge des Anschlusskabels kann beispielsweise so bemessen sein, dass die Dreh- oder Schwenkbewegung innerhalb des vorgesehenen Bewegungsbereichs durch das Anschlusskabel nicht verhindert wird.

Beispielsweise kann vorgesehen sein, dass das Anschlusskabel als Flachbandkabel ausgeführt ist.

Von Vorteil ist dabei, dass ein Flachbandkabel eine Vorzugsrichtung für Biegungen aufweist, welche so ausgerichtet werden kann, dass eine Dreh- oder Schwenkbewegung der Prallplattenhalterung durch das Anschlusskabel so gering wie möglich beeinträchtigt wird.

Zur Weiterverarbeitung der elektrischen Signale des resonant schwingenden, massensensitiven Elements und/oder zur Ansteuerung des resonant schwingenden, massensensitiven Elements und/oder für weitere Funktionen kann vorgesehen sein, dass das Anschlusskabel mit einer Auswerteelektronik für das resonant schwingende, massensensitive Element elektrisch verbunden ist.

Zur Ausführung der Relativbewegung zwischen Prallplattenhalterung und Klassierdüse kann beispielsweise der Motor mit der Prallplattenhalterung über ein Getriebe gekoppelt sein, oder es kann vorgesehen sein, dass der Motor zur Ausführung einer gegebenenfalls begrenzten Bewegung elektrisch angesteuert wird.

Besonders günstig ist es, wenn der Motor ein Schrittmotor ist. Von Vorteil ist dabei, dass sich die Position des Motors und damit die Bewegung der Prallplattenhalterung besonders präzise steuern lässt. Der Motor kann auch ein DC-Motor sein.

Zur Bereitstellung eines robusten, für viele Einsatzgebiete geeigneten Impaktors kann vorgesehen sein, dass der Motor mit der Prallplattenhalterung in einer nach außen abgedichteten Kapselung angeordnet ist. Beispielsweise kann die Kapselung aus einem Gehäusetopf, in welchem beispielsweise der Motor angeordnet ist, und einem Gehäusedeckel gebildet sein, wobei beide Teile lösbar miteinander verbunden sein können. Nach dem Lösen der Verbindung ist es so leicht möglich, um an die innenliegenden Teile des Impaktors zu gelangen.

Zur Einrichtung der Dreh- oder Schwenkbewegung kann vorgesehen sein, dass eine Ansteuerungselektronik oder eine Ansteuerungsmechanik für die Dreh- oder Schwenkbewegung der Prallplattenhalterung ausgebildet ist, mit welcher ein Wechsel des Richtungssinns und/oder eine Begrenzung des Dreh- oder Schwenkwinkels der Dreh- oder Schwenkbewegung bewirkbar ist/sind. Beispielsweise kann dies durch ein Kurbelgetriebe eingerichtet sein oder es kann ein Schrittmotor gemäß einem vorgegebenen Ablaufprogramm elektronisch angesteuert werden.

Es kann vorgesehen sein, dass die Prallplattenhalterung eine Heizvorrichtung aufweist. Von Vorteil ist dabei, dass hierdurch eine Temperaturdrift der masseabhängigen Resonanzfrequenz des resonant schwingenden, massensensitiven Elements verhindert werden kann. Vorzugsweise ist die Heizvorrichtung an das oder ein flexible(s) Anschlusskabel angeschlossen.

Zur Erreichung einer gleichmäßigen Verteilung der abgelagerten Schwebeteilchen auf dem resonant schwingenden, massensensitiven Element kann vorgesehen sein, dass die Klassierdüse eine Durchtrittsöffnung aufweist, welche in Bezug auf die Achse exzentrisch angeordnet ist.

Beispielsweise kann die Klassierdüse eine einzige Durchtrittsöffnung aufweisen. Von Vorteil ist dabei, dass eine besonders einfach zu fertigende Klassierdüse bereitgestellt ist.

Gemäß einer Erfindung von eigenständiger Bedeutung kann bei einem Impaktor der eingangs beschriebenen Art vorgesehen sein, dass die Klassierdüse veränderbar, insbesondere verschiebbar und/oder auswechselbar, eingerichtet ist, um einen Auftreffpunkt des durch die Klassierdüse geleiteten Trägergases auf dem resonant schwingenden, massensensitiven Element transversal zu einer Linie konstanter Massenempfindlichkeit zu verschieben. Von Vorteil ist dabei, dass die Massenempfindlichkeit des resonant schwingenden, massensensitiven Elements an eine gewünschte Sensorempfindlichkeit und/oder an einen vorhandenen Wertebereich einer Auswerteelektronik anpassbar ist.

Die Veränderung kann durch Auswechslung der Klassierdüse gegen eine andere Klassierdüse erfolgen, deren wenigstens eine Durchtrittsöffnung an einer anderen Position ist als bei der ersten Klassierdüse. In diesem Fall umfasst der Impaktor wenigstens zwei Klassierdüsen, die gegeneinander austauschbar angeordnet oder aufbewahrt sind.

Die Veränderbarkeit kann zusätzlich oder alternativ durch eine bewegliche Anordnung der Klassierdüse in einer Klassierdüseneinheit eingerichtet sein.

Es kann auch vorgesehen sein, dass die Prallplattenhalterung entlang einer zweiten Achse beweglich und/oder verfahrbar angeordnet ist.

Ist die Linie beispielsweise - wie oben erläutert - durch einen Kreis oder einen Kreisbogen gegeben, so kann die Veränderung des Auftreffpunktes in radialer Richtung in Bezug auf den Kreis und/oder ein Zentrum der Dreh- oder Schwenkbewegung erfolgen.

Zur Lösung der Aufgabe ist bei einem Verfahren der eingangs genannten Art erfindungsgemäß vorgesehen, dass das resonant schwingende, massensensitive Element während des Ablagerungsvorgangs und/oder zwischen zwei Ablagerungsvorgängen relativ zu der statischen Klassierdüse bewegt wird. Somit kann eine gleichmäßige Ausnutzung der Oberfläche des resonant schwingenden, massensensitiven Elements erreicht werden, wodurch die Zahl der nötigen Wartungsmaßnahmen je Zeiteinheit reduzierbar ist. Hierdurch wird das Verfahren vereinfacht.

Die Bewegung kann kontinuierlich und/oder in bestimmten Zeitabständen und/oder nach einer bestimmten Schwebteilchenbeladung an einem Auftreffpunkt ausgeführt werden.

Beispielsweise kann die Bewegung als Dreh- oder Schwenkbewegung ausgeführt werden. Von Vorteil ist dabei, dass die Ablagerungsstelle auf dem resonant schwingenden, massensensitiven Element entlang eines Kreisbogens beziehungsweise eines Vollkreises geführt werden kann. Zur Kompensation einer Temperaturabhängigkeit der massenabhängigen Resonanzfrequenz des resonant schwingenden, massensensitiven Elements kann vorgesehen sein, dass das resonant schwingende, massensensitive Element während des Ablagerungsvorgangs beheizt wird. Vorzugsweise erfolgt die Beheizung elektrisch.

Eine einfache realisierbare Ausgestaltung mit einer günstigen Ausnutzung der Oberfläche des resonant schwingenden, massensensitiven Elements kann vorsehen, dass das resonant schwingende, massensensitive Element relativ zur Klassierdüse um eine Achse gedreht oder geschwenkt wird.

Hierbei kann vorgesehen sein, dass die Dreh- oder Schwenkbewegung gegenüber einem Vollkreis begrenzt wird.

Von Vorteil ist dabei, dass ein übermäßiges Aufwickeln oder ein Abreißen eines Anschlusskabels zwischen dem beweglichen Schwingquarz und einer stationären Elektronik vermeidbar ist.

Zur Erreichung einer periodisch wiederkehrenden Bewegung kann vorgesehen sein, dass der Richtungssinn der Dreh- oder Schwenkbewegung während der Bewegung umgekehrt wird.

Eine Erfindung von eigenständiger Bedeutung kann bei dem eingangs beschriebenen Verfahren vorsehen, dass während des Ablagerungsvorgangs und/oder zwischen zwei Ablagerungsvorgängen ein Auftreffpunkt des durch die Klassierdüse geleiteten Trägergases auf das resonant schwingende, massensensitive Element transversal zu einer Linie konstanter Massensensitivität auf dem resonant schwingenden, massensensitiven Element verschoben wird.

Wird die Relativbewegung des resonant schwingenden, massensensitiven Elements durch eine Dreh- oder Schwenkbewegung ausgeführt, so kann vorgesehen sein, dass der Auftreffpunkt in radialer Richtung verschoben wird.

Es kann auch vorgesehen sein, dass die Klassierdüse gegen eine andere Klassierdüse ausgetauscht wird, deren wenigstens eine Durchtrittsöffnung an einer Position ausgebildet ist, die einer Linie veränderter Massensensitivität entspricht.

Die Erfindung wird nun anhand eines Ausführungsbeispiels näher beschrieben, ist jedoch nicht auf dieses Ausführungsbeispiel beschränkt. Weitere Ausführungsbeispiele ergeben sich durch Kombination einzelner oder mehrerer Merkmale der Ansprüche untereinander und/oder mit einzelnen oder mehreren Merkmalen des Ausführungsbeispiels.

Es zeigt:
- Fig. 1 :: in einer dreidimensionalen Schnittansicht einen erfindungsgemäßen Impaktor,
- Fig. 2:: die Schnittansicht gemäß Fig. 1 in einer Axialschnittdarstellung,
- Fig. 3:: die im Inneren der Kapselung des erfindungsgemäßen Impaktors gemäß Fig. 1 angeordneten Teile in einer dreidimensionalen Schnittansicht,
- Fig. 4:: die Schnittansicht gemäß Fig. 3 in einer Axialschnittdarstellung,
- Fig. 5.: einen Radialschnitt durch die im Inneren der Kapselung des erfindungsgemäßen Impaktors gemäß Fig. 1 angeordneten Teile in Höhe des spiralförmig aufgewickelten Anschlusskabels in einer Ansicht von unten in Richtung Prallplatte,
- Fig. 6:: die Schnittdarstellung gemäß Fig. 5 in entgegengesetzter Blickrichtung auf den Motor,
- Fig. 7:: eine dreidimensionale Schrägansicht auf die Klassierdüseneinheit des erfindungsgemäßen Impaktors gemäß Fig. 1,
- Fig. 8:: eine Prinzipdarstellung zur Erläuterung des erfindungsgemäßen Verfahrens,
- Fig. 9:: eine Prinzipdarstellung zur weiteren Erläuterung der Erfindung in Blickrichtung auf das als Prallplatte wirkende resonant schwingende, massensensitive Element und
- Fig. 10:: eine weitere Prinzipdarstellung zur Erläuterung der Erfindung gemäß Fig. 9 in einer Axialschnittansicht von der Seite.

Die Figuren werden im Folgenden gemeinsam beschrieben.

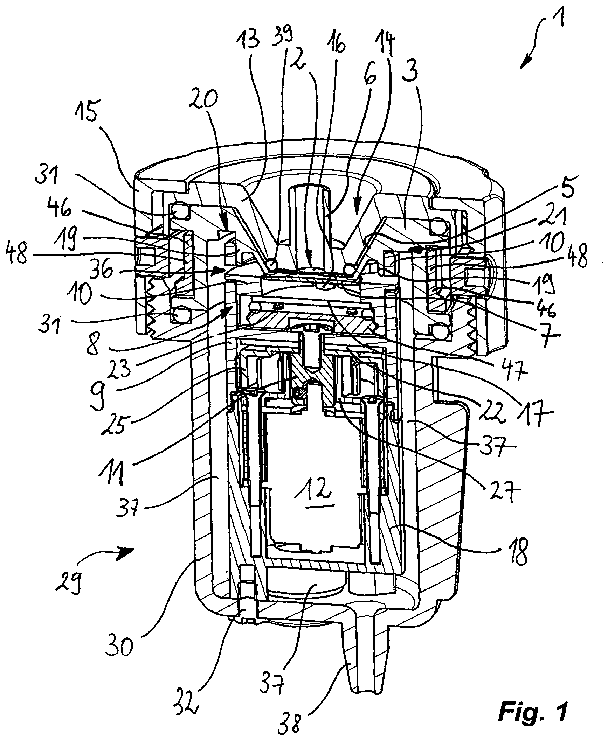

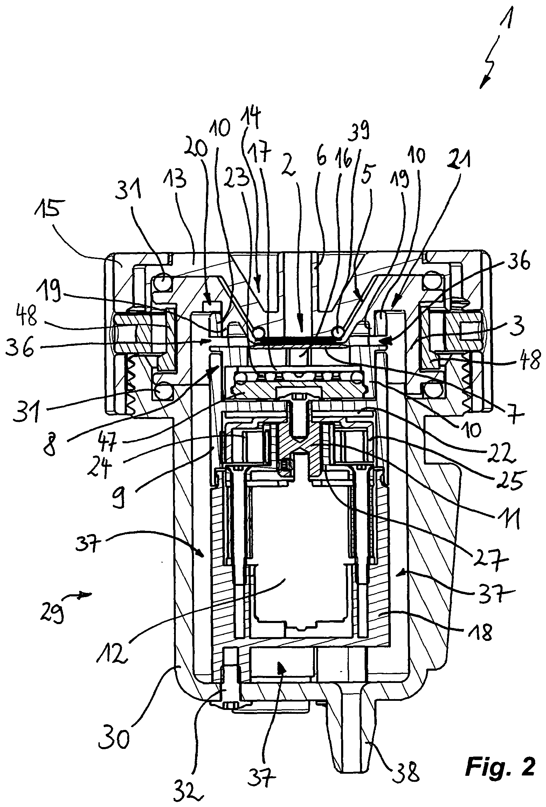

Fig. 1 und Fig. 2 zeigen Schnittdarstellungen eines erfindungsgemäßen, im ganzen mit 1 bezeichneten Impaktors.

Der Impaktor 1 hat eine Klassierdüse 2, welche an einer Klassierdüseneinheit 3 ausgebildet ist.

Die Klassierdüse 2 ist hierbei als Öffnung im herausnehmbaren und somit austauschbaren Boden 4 einer topfförmigen Ausnehmung mit kegelstumpfförmiger Seitenwand 5 der Klassierdüseneinheit 3 ausgebildet.

Das zu untersuchende Trägergas, welches Schwebeteilchen enthält, wird über einen an dem Anschlussstutzen 6 angeschlossenen Schlauch oder dergleichen der Klassierdüse 2 zugeführt und durch diese auf eine Prallplatte 7 geleitet.

Die Prallplatte 7 ist so dicht hinter der Klassierdüse 2 angeordnet, dass nur Schwebeteilchen, deren Masse unter einem bestimmten Wert liegt, dem durch die Prallplatte abgelenkten Strom des Trägergases folgen können. Die übrigen Schwebeteilchen treffen auf die Prallplatte 7 und lagern sich dort ab.

Die Prallplatte 7 ist in an sich bekannter Weise als resonant schwingendes, massensensitives Element, im Beispiel als Schwingquarz, ausgebildet, dessen Resonanz- oder Eigenfrequenz masseabhängig ist. Dies hat zur Folge, dass sich die Resonanzfrequenz des resonant schwingenden, massensensitiven Elements ändert, wenn sich Schwebeteilchen auf der Oberfläche ablagern.

Die Resonanzfrequenz des resonant schwingenden, massensensitiven Elements wird in an sich bekannter Weise mit einem elektronischen Sweep-Signal erfasst, ohne dass die Prallplatte 7 hierzu aus dem Impaktor 1 entfernt werden muss.

Es sind somit Online-Messungen der abgelagerten Masse möglich.

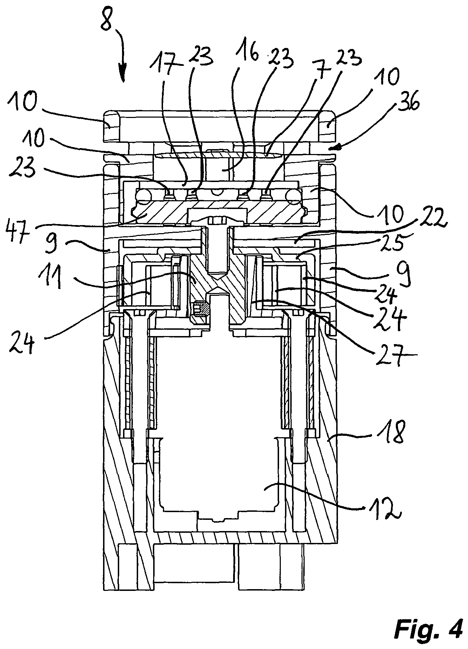

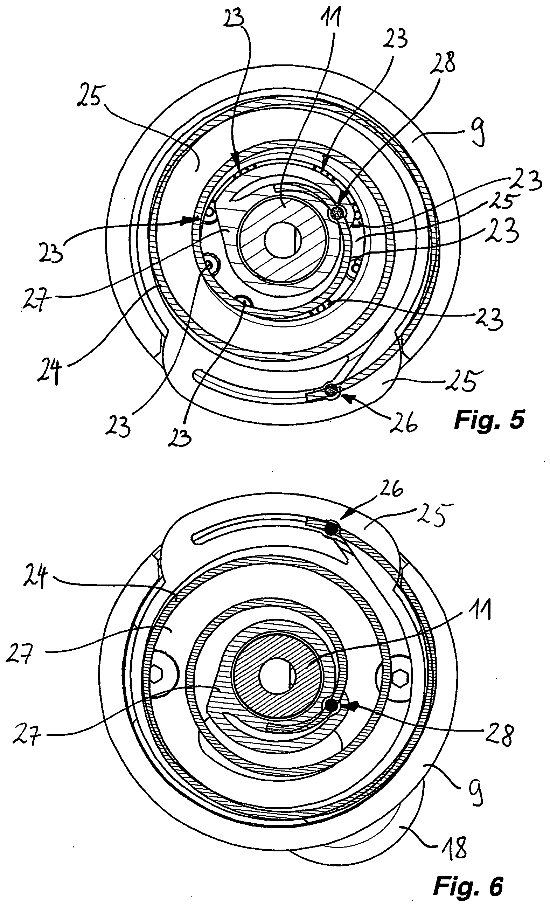

Wie in Fig. 4 und Fig. 5 näher ersichtlich ist, ist die Prallplatte 7 in einer Prallplattenhalterung 8 angeordnet.

Die Prallplattenhalterung 8 weist hierbei einen Haltering 10 und eine Abschlussplatte 47 auf, welche in eine nicht zur Prallplattenhalterung gehörende Haltebuchse 9 drehfest eingesetzt ist.

Im dargestellten Ausführungsbeispiel umfasst die Prallplattenhalterung 8 das resonant schwingende, massensensitive Element 7, die Befestigungselemente 16, den Haltering 10, die Halteplatte 17 und die Abschlussplatte 47.

Die Prallplattenhalterung 8 ist aus der Haltebuchse 9 herausnehmbar ausgebildet.

Über einen Mitnehmer 11 ist die Prallplattenhalterung 8 mit der Abtriebswelle eines Motors 12 verbunden.

Die Prallplattenhalterung 8 ist daher im Impaktor 1 bewegbar angeordnet und kann mit dem Motor 12 um die Achse des Motors geschwenkt oder gedreht werden.

Die Klassierdüse 2 ist im Impaktor 1 mit der Klassierdüseneinheit 3 herausnehmbar angeordnet. Hierzu kann der Gehäusedeckel 13, dessen kegelstumpfförmige Absenkung 14 passend zu der topfförmigen Ausnehmung aus Boden 4 und Seitenwand 5 der Klassierdüseneinheit 3 ausgebildet ist und in diese in Gebrauchsstellung eingesetzt ist, entfernt werden, indem das Verbindungselement 15, im Ausführungsbeispiel eine Überwurfmutter, gelöst und entfernt wird.

Zur Temperierung der Klassierdüse 2 ist eine Heizung 48 vorhanden, welche die Klassierdüseneinheit 3 außenseitig ringförmig umgibt.

Bei herausgenommener Klassierdüseneinheit 3 ist der Haltering 10 freigegeben, welcher nun ebenfalls entfernt werden kann, um an die Prallplatte 7 zu gelangen.

Die Prallplatte 7 ist über zwei an gegenüberliegenden Seiten der Prallplatte 7 angreifende Befestigungselemente 16 an einer Halteplatte 17 befestigt und an diese elektrisch angeschlossen. Die Halteplatte 17 ist als Platine ausgebildet und stellt die elektrische Kontaktierung für das resonant schwingende, massensensitive Element 7 bereit. Die Halteplatte 17 weist neben den Befestigungselementen 16 eine nicht weiter ersichtliche Heizung auf. Sie kann auch einen Speicherbaustein aufweisen. Die Heizung verhindert, dass das Signal des Quarzes thermischen Einflüssen unterliegt. Der Speicherbaustein kann dazu dienen, dass in jedem Quarzmodul bzw. zu jedem resonant schwingenden, massensensitiven Element 7 spezifische Daten hinterlegt werden können.

In montierter Position beaufschlagt die Klassierdüseneinheit 3 den Haltering 10 der Prallplattenhalterung 8. Somit stützt sich die Prallplattenhalterung 8 an der Klassierdüseneinheit 3 ab, und die Halteplatte 17 mit der Prallplatte 7 wird durch den Haltering 10 fixiert.

Die Haltebuchse 9 übergreift axial in einem Teilbereich das Motorgehäuse 18 des Motors 12, wodurch die Dreh- oder Schwenkbewegung der Prallplattenhalterung 8 radial geführt ist.

An der Innenseite der Klassierdüseneinheit 3 ist ein Führungsmittel 19 - im Ausführungsbeispiel ein umlaufender, nach innen vorstehender Kragen - ausgebildet, welches über den radial außenseitig anliegenden Haltering 10 die Prallplattenhalterung 8 radial führt.

An der Innenseite der Klassierdüseneinheit 3 ist eine über nahezu einen Vollkreis umlaufende Nut 20 eingebracht, welche an einer Stelle des Umfangs unterbrochen ist. Hierdurch ist ein Anschlag 21 für einen nicht weiter ersichtlichen, in die Nut 20 eingreifenden Vorsprung am Haltering 10 gebildet.

Dieser Anschlag 21 verhindert somit, dass sich die Prallplattenhalterung 8 um einen Vollkreis drehen kann. Vielmehr ist die Dreh- oder Schwenkbewegung der Prallplattenhalterung 8 um ihre Achse gegenüber einem Vollkreis begrenzt, und der Motor 12, im Ausführungsbeispiel ein Schrittmotor, wird durch eine nicht weiter dargestellte, an sich bekannten Ansteuerungselektronik so angesteuert, dass die Prallplattenhalterung 8 mit dem als Prallplatte bewirkenden Schwingquarz 7 zwischen den Endpunkten der Dreh- oder Schwenkbewegung bewegt wird, indem periodisch wiederkehrend der Richtungssinn der Dreh- oder Schwenkbewegung umgekehrt wird.

Zwischen den Haltering 10 und die Haltebuchse 9 ist eine Platine 22 eingesetzt, an deren Oberseite, also an deren der Prallplatte 7 und der Halteplatte 17 zugewandten Seite, federnde Kontaktstifte 23 angeordnet sind.

Die Kontaktstifte 23 sind regelmäßig angeordnet und beaufschlagen somit gleichmäßig die Halteplatte 17.

Die Kontaktstifte 23 kontaktieren nicht weiter ersichtliche, an sich bekannte elektrische Anschlussbahnen an der Unterseite der Halteplatte 17 und stellen so einen elektrischen Kontakt zwischen der Halteplatte 17 und einem Anschlusskabel 24 her.

Wie in Fig. 5 und Fig. 6 in Schnittdarstellungen ersichtlich ist, ist das Anschlusskabel 24 spiralförmig aufgewickelt.

Das als Flachband gefertigte Anschlusskabel 24 bildet somit ein flexibles Anschlusskabel 24, welches die Dreh- oder Schwenkbewegung der Prallplattenhalterung 8 innerhalb des gewünschten Bewegungsbereichs nicht verhindert.

Das Anschlusskabel 24 ist an seinem radial äußeren Ende an einem mit der Prallplattenhalterung 8 drehfest verbundenen oberen Kabelabdeckung 25 festgelegt und über ein Fixierungsmittel 26 an die durch die obere Kabelabdeckung 25 geführten Kontaktstifte 23 elektrisch angeschlossen.

Das Anschlusskabel 24 ist als achtadriges Flachbandkabel ausgebildet, welches an die acht Kontaktstifte 23 angeschlossen ist. Es sind auch andere Anzahlen von Adern und von Kontaktstiften 23 realisierbar.

An seinem radial inneren Ende ist das Anschlusskabel 24 an einer unteren Kabelabdeckung 27 festgelegt, welche drehfest mit dem Motorgehäuse 18 verbunden ist und welche stationär verbleibt.

Über ein Fixierungsmittel 28 ist das achtadrige Anschlusskabel 24 mit einer nicht weiter dargestellten Ansteuerungselektronik verbunden.

Die untere Kabelabdeckung 27 und die obere Kabelabdeckung 25 umschließen oder umgeben das Anschlusskabel 24 gehäusebildend. Der Motor 12 mit dem Motorgehäuse 18 und die Prallplattenhalterung 8 mit den zugehörigen Aufbauten sind in einer Kapselung 29 angeordnet, welche durch den Gehäusedeckel 13, einen Gehäusetopf 30 und die zwischen diesen eingesetzte Klassierdüseneinheit 3 gebildet wird.

Durch Dichtungen 31 ist die Kapselung 29 nach außen abgedichtet.

Das Motorgehäuse 18 ist mittels Befestigungselementen 32 - im Ausführungsbeispiel Schrauben - an dem Gehäusetopf 30 befestigt.

Der Gehäusetopf 30 ist so dimensioniert, dass der Motor 12 mit den mit diesem verbundenen Teilen vollständig aufgenommen wird.

Über das Anschlusskabel 24 wird eine, in der Prallplattenhalterung 8 angeordneten, nicht weiter ersichtlichen Heizvorrichtung elektrische Heizenergie zugeführt, um das resonant schwingende, massensensitive Element 7 auf einer gewünschten Temperatur zu halten.

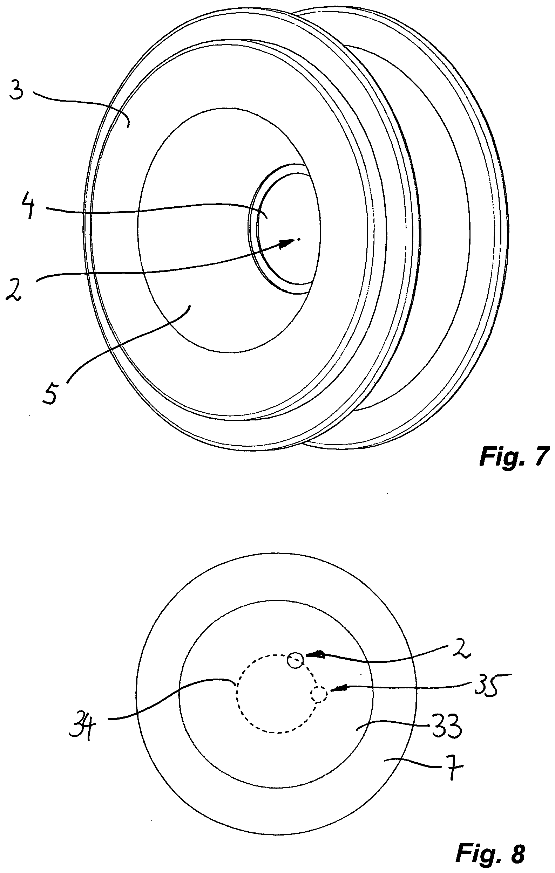

Fig. 8 zeigt eine Draufsicht auf die Prallplatte 7 mit dem scheibenförmig rund ausgebildeten Schwingquarzbereich 33.

Dargestellt ist eine mögliche Position der Klassierdüse 2 in Strömungsrichtung des Trägergases vor der Prallplatte 7.

Es ist ersichtlich, dass die Klassierdüse 2 exzentrisch in Bezug auf die Mitte der Scheibe des resonant schwingenden, massensensitiven Elements, welche gleichzeitig die Achse der Dreh- oder Schwenkbewegung darstellt, angeordnet ist.

Mittels des Motors 12 wird die Prallplatte 7 um ihre Achse gedreht, sodass die Klassierdüse 2 entlang eines Kreisbogens des Kreises 34 in eine neue Position 35 über der Prallplatte 7 gelangt.

Hierdurch wird erreicht, dass die Ablagerung der schweren Schwebeteilchen auf der Prallplatte 7 in einem anderen Bereich des resonant schwingenden, massensensitiven Elements 33 fortgesetzt werden kann, welcher bislang nicht oder nur gering der Klassierdüse 2 ausgesetzt war.

Das Trägergas mit den nicht auf der Prallplatte 7 deponierten, leichten Schwebeteilchen strömt über Durchtrittsöffnungen 36 und einen das Motorgehäuse 18 umgebenden Kanal 37 zu einem Austrittsstutzen 38 an dem Gehäusetopf 30, von wo es über einen Schlauch oder dergleichen von einer nicht weiter dargestellten, an sich bekannten Pumpe angesaugt wird.

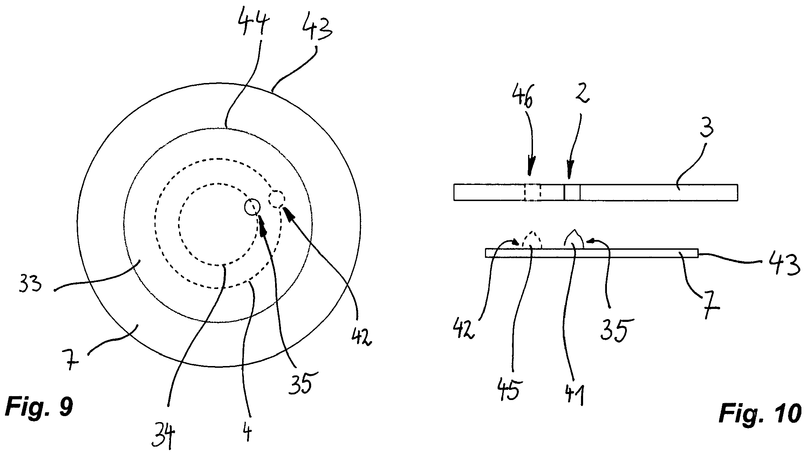

Fig. 9 zeigt eine Ansicht von oben auf das resonant schwingende, massensensitive Element 7 mit dem im Beispiel kreisrund ausgebildeten Schwingquarzbereich 33.

Auf dem resonant schwingenden, massensenstiven Element 7 existieren Linien 34, 40 konstanter Massenempfindlichkeit. Durch die kreisrunde Form des resonant schwingenden, massesensitiven Elements 7 beschreiben die Linien 34, 40 konzentrische Kreise. Bei anderen geometrischen Formen des Elements 7 sind andere Linien gebildet.

Die Linien 34, 40 sind häufig durch einen konstanten Abstand vom Rand 43 des Elements 7 und/oder vom Rand 44 des Schwingquarzbereichs 33 (oder des entsprechenden massensensitiven Bereichs bei einem anderen Element) beschrieben.

Wandert der Auftreffpunkt 35 - wie in Fig. 8 gezeigt - entlang der Linie 34, so bewirkt eine Ablagerung einer vorgegebenen Masse von Schwebeteilchen 41 eine jeweils gleichartige Änderung der Resonanzfrequenz des resonant schwingenden, massensensitiven Elements 7.

Die Klassierdüse 3 ist nun derart veränderbar eingerichtet ist, dass einen Auftreffpunkt 35 des durch die Klassierdüse geleitenten Trägergases auf dem resonant schwingenden, massensensitiven Element 7, 33 transversal zu einer Linie 34 konstanter Massenempfindlichkeit verschieben.

Im einfachsten Fall wird dies durch den Austausch der Klassierdüse 3 gegen eine andere Klassierdüse 3 erreicht, welchen eine Durchtrittsöffnung 46 an gegenüber der Durchtrittsöffnung 2 transversal zur Linie 34 verlagerter Position aufweist.

Alternativ können bei einem weiteren Ausführungsbeispiel die Klassierdüse 3 und das Element 7 so gegeneinander verschiebbar angeordnet sein und verschoben werden, dass sich der Auftreffpunkt 35 transversal zur Linie 34 auf der Oberfläche des Elements von der Linie 34 entfernt.

Beispielhaft ist ein neuer Auftreffpunkt 42 radial außerhalb des Auftreffpunktes 35 eingezeichnet. Es ist auch möglich, Auftreffpunkte innerhalb des Kreises 34 einzunehmen.

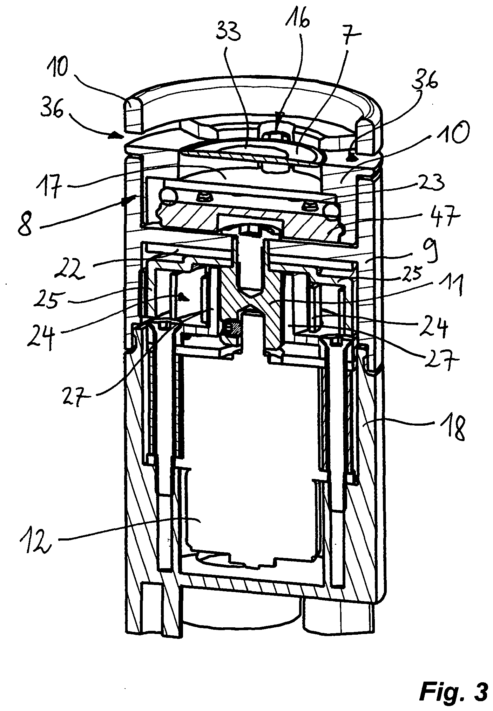

Bei dem neuen Auftreffpunkt 42 ergibt sich eine veränderte Abhängigkeit der Resonanzfrequenz des Elements 7 von der abgelagerten Masse von Schwebeteilchen 41, 45. Häufig ist es so, dass eine näher zum Aufspannpunkt (in Fig. 3 sind dies die am Rand 43 angreifenden Befestigungselemente 16) des resonant schwingenden, massensensitiven Elements 7 in der Prallplattenhalterung 8 angeordnete Linie 40 gegenüber einer weiter weg angeordneten Linie 34 eine erhöhte Veränderlichkeit der Resonanzfrequenz von der abgelagerten Masse von Schwebeteilchen 41, 45 hat.

Nun wird die Dreh- oder Schwenkbewegung des resonant schwingenden, massenabhängigen Elements 7 gegen die Klassierdüse 3 weiter ausgeführt, so dass der Auftreffpunkt 42 entlang des Kreisbogens oder Kreises 44 wie zu Fig. 8 beschrieben wandert.

Bei dem Impaktor 1 mit einer Prallplatte 7 und einer auf diese Prallplatte 7 gerichteten Klassierdüse 2, bei welchem die Prallplatte 7 als elektronisch auslesbarer Schwingquarz 7, 33 ausgebildet ist, wird vorgeschlagen, den in einer Prallplattenhalterung 8 gehaltenen Schwingquarz 7, 33 während des Betriebs des Impaktors 1 mit einem Motor 12 relativ zur statischen Klassierdüse 2 zu bewegen.

## Patentansprüche

1. Impaktor (1) zur Analyse eines mit Schwebeteilchen angereicherten Trägergases, mit einer wenigstens eine Klassierdüse (2) aufweisenden Klassierdüseneinheit (3) und genau einer Prallplatte (7), wobei die Prallplatte (7) als resonant schwingendes, massensensitives Element (7, 33) ausgebildet ist und wobei das resonant schwingende, massensensitives Element (7, 33) an einer Prallplattenhalterung (8) befestigt ist, **dadurch gekennzeichnet, dass** die Prallplattenhalterung (8) mit einem Motor (12) relativ zu der Klassierdüse (2) bewegbar angeordnet ist, so dass ein Auftreffpunkt (35) des mit Schwebeteilchen angereicherten Trägergases auf die Prallplatte (7) entlang eines Kreisbogens oder eines Kreises, wobei ein Mittelpunkt mit einer Achse der Dreh- oder Schwenkbewegung zusammenfällt, auf der Prallplatte (7) wandert und ein Ablagerungsort der Schwebeteilchen auf dem resonant schwingenden, massensensitiven Element während eines Ablagerungsvorgangs veränderbar ist, wobei der Auftreffpunkt durch die Relativbewegung entlang einer Linie konstanter Massensensitivität geführt ist, dass das resonant schwingende massensensitive Element (7, 33) mit einem flexiblen Anschlusskabel (24) elektrisch verbunden ist und dass das Anschlusskabel (24) so dimensioniert ist, dass eine Dreh- oder Schwenkbewegung der Prallplattenhalterung (8) innerhalb eines vorgegebenen Dreh- oder Schwenkbereichs ermöglicht ist.

2. Impaktor (1) nach Anspruch 1, **dadurch gekennzeichnet, dass** die Prallplattenhalterung (8) um eine Achse dreh- oder schwenkbar angeordnet ist und/oder dass das resonant schwingende, massensensitive Element (7, 33) ein Schwingquarz oder ein SAW-Baustein ist.

3. Impaktor (1) nach Anspruch 1 oder 2, **dadurch gekennzeichnet, dass** die Klassierdüse (2) herausnehmbar im Impaktor (1) angeordnet ist und/oder dass die Prallplattenhalterung (8) im Impaktor herausnehmbar angeordnet ist und/oder dass die Klassierdüse (2) beheizbar ausgebildet ist.

4. Impaktor (1) nach einer der Ansprüche 1 bis 3, **dadurch gekennzeichnet, dass** die Prallplattenhalterung (8) an der Klassierdüseneinheit (3) anliegt oder abgestützt ist und/oder dass die Prallplattenhalterung (8) an der Klassierdüseneinheit (3) bezüglich der Achse einer Dreh- oder Schwenkbewegung radial geführt ist und/oder dass die Prallplattenhalterung (8) an einem Motorgehäuse (18) des Motors (12) zumindest radial geführt ist.

5. Impaktor (1) nach einer der Ansprüche 1 bis 4, **dadurch gekennzeichnet, dass** die Klassierdüseneinheit (3) an ihrer dem resonant schwingenden, massensensitiven Element (7, 33) zugewandten Seite ein Führungsmittel (19) zur radialen und/oder axialen Führung der Prallplattenhalterung (8) aufweist und/oder dass an einem dreh- oder schwenkbaren Teil (8, 9, 10) und/oder an einem stationären Teil (3, 18, 30), insbesondere an der Klassierdüseneinheit (3) und/oder an der Prallplattenhalterung (8), ein Anschlag (21) ausgebildet ist, welcher die Dreh- oder Schwenkbewegung der Prallplattenhalterung (8) um die Achse gegenüber einem Vollkreis begrenzt.

6. Impaktor (1) nach einer der Ansprüche 1 bis 5, **dadurch gekennzeichnet, dass** die Prallplattenhalterung (8) eine Halteplatte (17) aufweist, an welcher das resonant schwingende, massensensitive Element (7, 33) gehalten ist, und/oder dass die Prallplattenhalterung (8) federnde Kontaktstifte (23) aufweist, welche in Gebrauchsstellung die Halteplatte (17), vorzugsweise an der Unterseite der Halteplatte (17), kontaktieren.

7. Impaktor (1) nach einer der Ansprüche 1 bis 6, **dadurch gekennzeichnet, dass** die Kontaktstifte (23) mit einem flexiblen Anschlusskabel (24) elektrisch verbunden sind und/oder dass das Anschlusskabel (24) als Flachbandkabel ausgeführt ist und/oder dass das Anschlusskabel (24) mit einer Auswerteelektronik für das resonant schwingende, massensensitive Element (7, 33) elektrisch verbunden ist.

8. Impaktor (1) nach einer der Ansprüche 1 bis 7, **dadurch gekennzeichnet, dass** der Motor (12) ein Schrittmotor ist und/oder dass der Motor (12) mit der Prallplattenhalterung (8) in einer nach außen abgedichteten Kapselung (29) angeordnet ist.

9. Impaktor (1) nach einer der Ansprüche 1 bis 8, **dadurch gekennzeichnet, dass** eine Ansteuerungselektronik oder eine Ansteuerungsmechanik für die Dreh- oder Schwenkbewegung der Prallplattenhalterung (8) ausgebildet ist, mit welcher ein Wechsel des Richtungssinns und/oder eine Begrenzung des Dreh- oder Schwenkwinkels der Dreh- oder Schwenkbewegung bewirkbar ist/sind.

10. Impaktor (1) nach einer der Ansprüche 1 bis 9, **dadurch gekennzeichnet, dass** die Prallplattenhalterung (8) eine Heizvorrichtung aufweist, insbesondere wobei die Heizvorrichtung an das flexible Anschlusskabel (24) angeschlossen ist.

11. Impaktor (1) nach einer der Ansprüche 1 bis 10, **dadurch gekennzeichnet, dass** die Klassierdüse (2) eine, vorzugsweise eine einzige, Durchtrittsöffnung aufweist, welche in Bezug auf die Achse exzentrisch angeordnet ist und/oder dass die Klassierdüse (2) veränderbar, insbesondere verschiebbar und/oder auswechselbar, eingerichtet ist, um einen Auftreffpunkt (35, 40) des durch die Klassierdüse geleitenden Trägergases auf dem resonant schwingenden, massensensitiven Element (7, 33) transversal zu einer Linie (34) konstanter Massenempfindlichkeit zu verschieben.

12. Verfahren zur Charakterisierung eines mit Schwebeteilchen angereicherten Trägergases, wobei das mit Schwebeteilchen angereicherte Trägergas in einem Impaktor (1) durch eine Klassierdüse (2) auf ein als Prallplatte (7) wirkendes resonant schwingendes, massensensitives Element (7, 33) derart geführt wird, dass sich Schwebeteilchen ab einer vorgegebenen Masse in einem Ablagerungsvorgang an dem resonant schwingenden, massensensitiven Element (7, 33) ablagern, und wobei die Masse der an dem resonant schwingenden, massensensitiven Element (7, 33) abgelagerten Schwebeteilchen während des Ablagerungsvorgangs und/oder zwischen zwei Ablagerungsvorgängen elektronisch bestimmt wird, wobei elektrische Signale vom und zum resonant schwingenden, massensensitiven Element (7, 33) über ein Anschlusskabel (24) geleitet werden, **dadurch gekennzeichnet, dass** das resonant schwingende, massensensitive Element (7, 33) während des Ablagerungsvorgangs relativ zu der statischen Klassierdüse (2) bewegt wird, so dass ein Auftreffpunkt (35) des mit Schwebeteilchen angereicherten Trägergases auf die Prallplatte (7) entlang eines Kreisbogens oder eines Kreises, wobei ein Mittelpunkt mit einer Achse einer Dreh- oder Schwenkbewegung der Prallplatte (7) zusammenfällt, auf der Prallplatte (7) wandert und ein Ablagerungsort der Schwebeteilchen auf dem resonant schwingenden, massensensitiven Element während des Ablagerungsvorganges verändert wird, wobei der Auftreffpunkt durch die Relativbewegung entlang einer Linie konstanter Massensensitivität geführt wird.

13. Verfahren nach Anspruch 12, **dadurch gekennzeichnet, dass** das resonant schwingende, massensensitive Element (7, 33) während des Ablagerungsvorgangs vorzugsweise elektrisch beheizt wird.

14. Verfahren nach Anspruch 12 oder 13, **dadurch gekennzeichnet, dass** das resonant schwingende, massensensitive Element (7, 33) relativ zur Klassierdüse um eine Achse gedreht oder geschwenkt wird, insbesondere wobei die Dreh- oder Schwenkbewegung gegenüber einem Vollkreis begrenzt wird und/oder wobei der Richtungssinn der Dreh- oder Schwenkbewegung während der Bewegung umgekehrt wird.

15. Verfahren nach einem der Ansprüche 12 bis 14, **dadurch gekennzeichnet, dass** während des Ablagerungsvorgangs und/oder zwischen zwei Ablagerungsvorgängen ein Auftreffpunkt (35) des durch die Klassierdüse (2) geleiteten Trägergases auf das resonant schwingende, massensensitive Element (7, 33) transversal zu einer Linie konstanter Massensensitivität (34) auf dem resonant schwingenden, massensensitiven Element (7, 33) verschoben wird.

## Claims

1. Impactor (1) for the analysis of a carrier gas enriched with suspended particles, with a classifying nozzle unit (3) having at least one classifying nozzle (2) and with just one impact plate (7), the impact plate (7) being formed as a resonantly oscillating, mass-sensitive element (7, 33) and the resonantly oscillating, mass-sensitive element (7, 33) being secured in an impact plate holder (8), **characterized in that** the impact plate holder (8) is arranged such that it can be moved in relation to the classifying nozzle (2) by a motor (12), so that a point of impingement (35) of the carrier gas enriched with suspended particles on the impact plate (7) migrates along an arc of a circle or along a circle, a center point coinciding with an axis of the rotating or pivoting movement, on the impact plate (7) and a depositing location of the suspended particles on the resonantly oscillating, mass-sensitive element can be changed during a depositing process, the point of impingement being guided by the relative movement along a line of constant mass sensitivity, **in that** the resonantly oscillating, mass-sensitive element (7, 33) is electrically connected to a flexible connecting cable (24) and **in that** the connecting cable (24) is dimensioned such that a rotating or pivoting movement of the impact plate holder (8) is made possible within a prescribed rotating or pivoting range.

2. Impactor (1) according to Claim 1, **characterized in that** the impact plate holder (8) is arranged rotatably or pivotably about an axis and/or **in that** the resonantly oscillating, mass-sensitive element (7, 33) is an oscillating crystal or an SAW module.

3. Impactor (1) according to Claim 1 or 2, **characterized in that** the classifying nozzle (2) is removably arranged in the impactor (1) and/or **in that** the impact plate holder (8) is removably arranged in the impactor and/or **in that** the classifying nozzle (2) is formed so as to be heatable.

4. Impactor (1) according to one of Claims 1 to 3, **characterized in that** the impact plate holder (8) bears against or is supported on the classifying nozzle unit (3) and/or **in that** the impact plate holder (8) is radially guided with respect to the axis of a rotating or pivoting movement on the classifying nozzle unit (3) and/or **in that** the impact plate holder (8) is at least radially guided on a motor housing (18) of the motor (12) .

5. Impactor (1) according to one of Claims 1 to 4, **characterized in that** the classifying nozzle unit (3) has on its side facing the resonantly oscillating, mass-sensitive element (7, 33) a guiding means (19) for the radial and/or axial guidance of the impact plate holder (8) and/or **in that** a stop (21) which limits the rotating or pivoting movement of the impact plate holder (8) about the axis with respect to a full circle is formed on a rotatable or pivotable part (8, 9, 10) and/or on a stationary part (3, 18, 30), in particular on the classifying nozzle unit (3) and/or on the impact plate holder (8).

6. Impactor (1) according to one of Claims 1 to 5, **characterized in that** the impact plate holder (8) has a holding plate (17) on which the resonantly oscillating, mass-sensitive element (7, 33) is held, and/or **in that** the impact plate holder (8) has resilient contact pins (23) which in the position for use contact the holding plate (17), preferably on the underside of the holding plate (17).

7. Impactor (1) according to one of Claims 1 to 6, **characterized in that** the contact pins (23) are electrically connected to a flexible connecting cable (24) and/or **in that** the connecting cable (24) is configured as a flat ribbon cable and/or **in that** the connecting cable (24) is electrically connected to an evaluation electronics unit for the resonantly oscillating, mass-sensitive element (7, 33).

8. Impactor (1) according to one of Claims 1 to 7, **characterized in that** the motor (12) is a stepping motor and/or **in that** the motor (12) is arranged with the impact plate holder (8) in an outwardly sealed encapsulation (29).

9. Impactor (1) according to one of Claims 1 to 8, **characterized in that** an activation electronics unit or an activation mechanism with which a change of direction and/or a limitation of the rotating or pivoting angle of the rotating or pivoting movement can be brought about is formed for the rotating or pivoting movement of the impact plate holder (8).

10. Impactor (1) according to one of Claims 1 to 9, **characterized in that** the impact plate holder (8) has a heating device, the heating device particularly being connected to the flexible connecting cable (24).

11. Impactor (1) according to one of Claims 1 to 10, **characterized in that** the classifying nozzle (2) has a through-opening, preferably a single through-opening, which is arranged eccentrically with respect to the axis, and/or **in that** the classifying nozzle (2) is set up such that it can be changed, in particular can be displaced and/or can be exchanged, in order to displace a point of impingement (35, 40) of the carrier gas conducted through the classifying nozzle on the resonantly oscillating, mass-sensitive element (7, 33) transversely in relation to a line (34) of constant mass sensitivity.

12. Method for characterizing a carrier gas enriched with suspended particles, the carrier gas enriched with suspended particles being conducted in an impactor (1) through a classifying nozzle (2) onto a resonantly oscillating, mass-sensitive element (7, 33) acting as an impact plate (7) in such a way that, as from a prescribed mass, suspended particles are deposited in a depositing process on the resonantly oscillating, mass-sensitive element (7, 33), and the mass of the suspended particles deposited on the resonantly oscillating, mass-sensitive element (7, 33) being determined electronically during the depositing process and/or between two depositing processes, electrical signals being passed from and to the resonantly oscillating, mass-sensitive element (7, 33) by way of a connecting cable (24), **characterized in that** the resonantly oscillating, mass-sensitive element (7, 33) is moved in relation to the static classifying nozzle (2) during the depositing process, so that a point of impingement (35) of the carrier gas enriched with suspended particles on the impact plate (7) migrates along an arc of a circle or along a circle, a center point coinciding with an axis of a rotating or pivoting movement of the impact plate (7), on the impact plate (7) and a depositing location of the suspended particles on the resonantly oscillating, mass-sensitive element is changed during the depositing process, the point of impingement being guided by the relative movement along a line of constant mass sensitivity.

13. Method according to Claim 12, **characterized in that** the resonantly oscillating, mass-sensitive element (7, 33) is heated, preferably electrically, during the depositing process.

14. Method according to Claim 12 or 13, **characterized in that** the resonantly oscillating, mass-sensitive element (7, 33) is rotated or pivoted about an axis in relation to the classifying nozzle, the rotating or pivoting movement particularly being limited with respect to a full circle and/or the direction of the rotating or pivoting movement being reversed during the movement.

15. Method according to one of Claims 12 to 14, **characterized in that**, during the depositing process and/or between two depositing processes, a point of impingement (35) of the carrier gas conducted through the classifying nozzle (2) on the resonantly oscillating, mass-sensitive element (7, 33) is displaced on the resonantly oscillating, mass-sensitive element (7, 33) transversely in relation to a line of constant mass sensitivity (34).

## Revendications

1. Impacteur (1) pour l'analyse d'un gaz porteur enrichi de particules en suspension, avec une unité de buse de classification (3) présentant au moins une buse de classification (2) et exactement une plaque d'impact (7), dans lequel la plaque d'impact (7) est formée par un élément vibrant en résonance et sensible à la masse (7, 33), et dans lequel l'élément vibrant en résonance et sensible à la masse (7, 33) est fixé à un support de plaque d'impact (8), **caractérisé en ce que** le support de plaque d'impact (8) est disposé de façon déplaçable avec un moteur (12) par rapport à la buse de classification (2), de telle manière qu'un point d'impact (35) du gaz porteur enrichi de particules en suspension sur la plaque d'impact (7) se déplace sur la plaque d'impact (7) le long d'un cercle ou d'un arc de cercle, dans lequel un point central coïncide avec un axe du mouvement de rotation ou de pivotement, et qu'un endroit de dépôt des particules en suspension sur l'élément vibrant en résonance et sensible à la masse soit variable pendant une opération de dépôt, dans lequel le point d'impact est guidé par le mouvement relatif le long d'une ligne d'égale sensibilité à la masse, **en ce que** l'élément vibrant en résonance et sensible à la masse (7, 33) est relié électriquement à un câble de raccordement flexible (24) et **en ce que** le câble de raccordement (24) est dimensionné de telle manière qu'un mouvement de rotation ou de pivotement du support de plaque d'impact (8) soit possible à l'intérieur d'une plage de rotation ou de pivotement prédéterminée.

2. Impacteur (1) selon la revendication 1, **caractérisé en ce que** le support de plaque d'impact (8) est disposé de façon rotative ou pivotante autour d'un axe et/ou **en ce que** l'élément vibrant en résonance et sensible à la masse (7, 33) est un résonateur à quartz ou un composant SAW.

3. Impacteur (1) selon une revendication 1 ou 2, **caractérisé en ce que** la buse de classification (2) est disposée dans l'impacteur (1) de façon amovible et/ou **en ce que** le support de plaque d'impact (8) est disposé dans l'impacteur de façon amovible et/ou **en ce que** la buse de classification (2) peut être chauffée.

4. Impacteur (1) selon l'une quelconque des revendications 1 à 3, **caractérisé en ce que** le support de plaque d'impact (8) est appliqué ou appuyé sur l'unité de buse de classification (3) et/ou **en ce que** le support de plaque d'impact (8) est guidé sur l'unité de buse de classification (3) radialement par rapport à l'axe d'un mouvement de rotation ou de pivotement et/ou **en ce que** le support de plaque d'impact (8) est guidé au moins radialement sur un boîtier de moteur (18) du moteur (12).

5. Impacteur (1) selon l'une quelconque des revendications 1 à 4, **caractérisé en ce que** l'unité de buse de classification (3) présente sur son côté tourné vers l'élément vibrant en résonance et sensible à la masse (7, 33) un moyen de guidage (19) pour le guidage radial et/ou axial du support de plaque d'impact (8) et/ou **en ce qu'**une butée (21) est formée sur une partie rotative ou pivotante (8, 9, 10) et/ou sur une partie stationnaire (3, 18, 30), en particulier sur l'unité de buse de classification (3) et/ou sur le support de plaque d'impact (8), laquelle limite le mouvement de rotation ou de pivotement du support de plaque d'impact (8) autour de l'axe par rapport à un cercle complet.

6. Impacteur (1) selon l'une quelconque des revendications 1 à 5, **caractérisé en ce que** le support de plaque d'impact (8) présente une plaque de maintien (17), sur laquelle l'élément vibrant en résonance et sensible à la masse (7, 33) est maintenu, et/ou **en ce que** le support de plaque d'impact (8) présente des tiges de contact élastiques (23), qui en position d'utilisation contactent la plaque de maintien (17), de préférence sur le côté inférieur de la plaque de maintien (17).

7. Impacteur (1) selon l'une quelconque des revendications 1 à 6, **caractérisé en ce que** les tiges de contact (23) sont électriquement reliées à un câble de raccordement flexible (24) et/ou **en ce que** le câble de raccordement (24) est formé par un câble plat et/ou **en ce que** le câble de raccordement (24) est électriquement relié à une électronique d'analyse pour l'élément vibrant en résonance et sensible à la masse (7, 33).

8. Impacteur (1) selon l'une quelconque des revendications 1 à 7, **caractérisé en ce que** le moteur (12) est un moteur pas à pas et/ou **en ce que** le moteur (12) est disposé avec le support de plaque d'impact (8) dans un capsulage (29) étanche vers l'extérieur.

9. Impacteur (1) selon l'une quelconque des revendications 1 à 8, **caractérisé en ce qu'**une électronique de commande ou un mécanisme de commande est réalisé(e) pour le mouvement de rotation ou de pivotement du support de plaque d'impact (8), avec laquelle/lequel un changement du sens directionnel et/ou une limitation de l'angle de rotation ou de pivotement du mouvement de rotation ou de pivotement peut/peuvent être opéré(s).

10. Impacteur (1) selon l'une quelconque des revendications 1 à 9, **caractérisé en ce que** le support de plaque d'impact (8) présente un dispositif de chauffage, en particulier dans lequel le dispositif de chauffage est raccordé au câble de raccordement flexible (24).

11. Impacteur (1) selon l'une quelconque des revendications 1 à 10, **caractérisé en ce que** la buse de classification (2) présente une, de préférence une seule, ouverture de passage, qui est disposée de façon excentrique par rapport à l'axe, et/ou **en ce que** la buse de classification (2) est conçue de façon variable, en particulier déplaçable et/ou échangeable, afin de déplacer un point d'impact (35, 40) du gaz porteur conduit à travers la buse de classification sur l'élément vibrant en résonance et sensible à la masse (7, 33) transversalement à une ligne (34) d'égale sensibilité à la masse.

12. Procédé de caractérisation d'un gaz porteur enrichi de particules en suspension, dans lequel on conduit le gaz porteur enrichi de particules en suspension dans un impacteur (1) à travers une buse de classification (2) sur un élément vibrant en résonance et sensible à la masse (7, 33) opérant comme plaque d'impact (7), de telle manière que des particules en suspension se déposent, à partir d'une masse prédéterminée, dans une opération de dépôt sur l'élément vibrant en résonance et sensible à la masse (7, 33), et dans lequel on détermine la masse des particules en suspension déposées sur l'élément vibrant en résonance et sensible à la masse (7, 33) pendant l'opération de dépôt et/ou entre deux opérations de dépôt, dans lequel on conduit des signaux électriques en provenance et à destination de l'élément vibrant en résonance et sensible à la masse (7, 33) par l'intermédiaire d'un câble de raccordement (24), **caractérisé en ce que** l'on déplace l'élément vibrant en résonance et sensible à la masse (7, 33) pendant l'opération de dépôt par rapport à la buse de classification statique (2), de telle manière qu'un point d'impact (35) du gaz porteur enrichi de particules en suspension sur la plaque d'impact (7) se déplace le long d'un arc de cercle ou d'un cercle, dans lequel un point central coïncide avec un axe d'un mouvement de rotation ou de pivotement de la plaque d'impact (7), et on change un endroit de dépôt des particules en suspension sur l'élément vibrant en résonance et sensible à la masse pendant l'opération de dépôt, dans lequel on conduit le point d'impact par le mouvement relatif le long d'une ligne d'égale sensibilité à la masse.

13. Procédé selon la revendication 12, **caractérisé en ce que** l'on chauffe, de préférence électriquement, l'élément vibrant en résonance et sensible à la masse (7, 33) pendant l'opération de dépôt.

14. Procédé selon la revendication 12 ou 13, **caractérisé en ce que** l'on fait tourner ou pivoter l'élément vibrant en résonance et sensible à la masse (7, 33) autour d'un axe par rapport à la buse de classification, en particulier dans lequel on limite le mouvement de rotation ou de pivotement par rapport à un cercle complet et/ou dans lequel on inverse le sens directionnel du mouvement de rotation ou de pivotement pendant le mouvement.

15. Procédé selon l'une quelconque des revendications 12 à 14, **caractérisé en ce que** l'on déplace sur l'élément vibrant en résonance et sensible à la masse (7, 33) un point d'impact (35) du gaz porteur conduit à travers la buse de classification (2) sur l'élément vibrant en résonance et sensible à la masse (7, 33), pendant l'opération de dépôt et/ou entre deux opérations de dépôt, transversalement à une ligne d'égale sensibilité à la masse (34).
